Europäisches Patentamt

European Patent Office

Office européen des brevets

(19)

(11) Veröffentlichungsnummer: **0 180 071
B1**

(12) **EUROPÄISCHE PATENTSCHRIFT**

(45) Veröffentlichungstag der Patentschrift:
**18.01.89**

(51) Int. Cl.⁴: **G 01 N 27/56**, G 01 N 27/28

(21) Anmeldenummer: **85112721.7**

(22) Anmeldetag: **08.10.85**

---

(54) **Messsonde.**

---

(30) Priorität: **13.10.84 DE 3437619**

(43) Veröffentlichungstag der Anmeldung:
**07.05.86 Patentblatt 86/19**

(45) Bekanntmachung des Hinweises auf die Patenterteilung:
**18.01.89 Patentblatt 89/3**

(84) Benannte Vertragsstaaten:
**CH DE FR IT LI NL**

(56) Entgegenhaltungen:
**DE-A- 3 243 334
DE-U- 7 930 207
GB-A- 1 498 791**

**Die Akte enthält technische Angaben, die nach dem Eingang der Anmeldung eingereicht wurden und die nicht in dieser Patentschrift enthalten sind.**

(73) Patentinhaber: **Pfaudler-Werke AG, Scheffelstrasse 55, D-6830 Schwetzingen (DE)**

(72) Erfinder: **Weissmann, Karl, Kuhbrunnenweg 7, D-6836 Oftersheim (DE)**

(74) Vertreter: **Endlich, Fritz, Dipl.-Phys.,
Postfach 1326 Blumenstrasse 8, D-8034 Germering (DE)**

---

ACTORUM AG

## Beschreibung

Die Erfindung betrifft eine Messsonde mit einem in einen emaillierten Sondenkörper einemaillierten Träger für eine Elektrode.

Es sind bereits emaillierte Messsonden dieser Art bekannt, die in emaillierten Apparaten als Porenprüfsonden zur Feststellung von Emailschäden oder als Messsonden zur Messung des rH-Werts oder des pH-Werts verwendbar sind. Derartige Messsonden finden vor allem zur Durchführung von Messungen in einer hochkorrosiven Umgebung Verwendung. Dabei besteht die Gefahr, dass bei Verwendung einer derartigen Messsonde verhältnismässig frühzeitig eine die Verwendbarkeit der Sonde beeinträchtigende Korrosion auftritt, insbesondere wenn die Messsonde unterschiedlichen hochkorrosiven Medien ausgesetzt wird.

Es ist deshalb Aufgabe der Erfindung, eine Messsonde der eingangs genannten Art derart zu verbessern, dass durch eine erhöhte Korrosionsbeständigkeit vielfältigere Einsatzmöglichkeiten oder eine längere Standzeit erzielt werden können.

Diese Aufgabe wird erfindungsgemäss durch den Gegenstand des Patentanspruchs 1 gelöst. Vorteilhafte Weiterbildungen der Erfindung sind Gegenstand der abhängigen Ansprüche.

Anhand der Zeichnung soll die Erfindung beispielsweise näher erläutert werden.

Es zeigen:

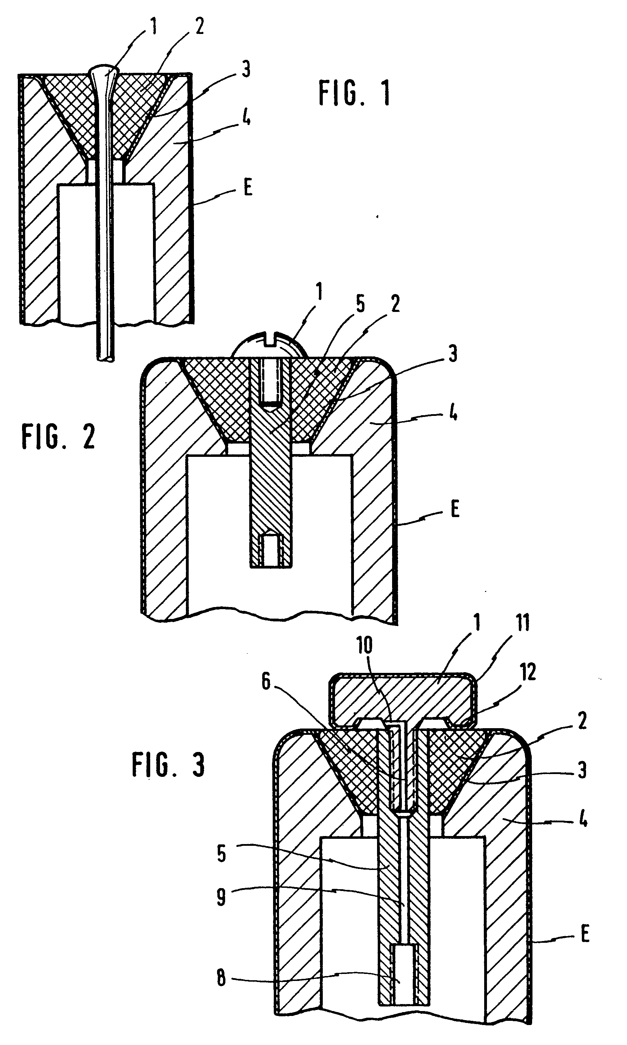

Fig. 1 bis 3 Längsschnitte durch drei unterschiedliche Aufführungsbeispiele einer Messsonde gemäss der Erfindung.

Die Figuren 1 bis 3 zeigen jeweils dasjenige Ende der Messsonde, an dem die Elektrode angeordnet ist. Die Messsonde kann im übrigen eine an sich beliebige bekannte Konstruktion aufweisen.

Bei dem in Fig. 1 dargestellten Ausführungsbeispiel ist die Messelektrode 1 in einen zur Aussenseite hin divergierenden Kegel 2 aus Email oder Keramikmaterial eingeschmolzen. Der Kegel 2 wird aus einem Pulver aus Email oder sonstigem Keramikmaterial hergestellt, welches Pulver mit einem Bindemittel bei Bedarf vermischt wird und mit einem Druck zwischen 400 und 1000 bar verpresst wird. Der Pressling kann entweder als Zylinder oder isostatisch als Kegel gepresst werden. Die hergestellten Presslinge werden nach einer Trocknung mechanisch bearbeitet, um eine Bohrung für die Messelektrode auszubilden und eine geeignete Kegelform bei zylindrischen Presslingen herzustellen. In die Bohrung wird die Elektrode 1 eingesteckt, die bei diesem Ausführungsbeispiel aus Platin oder einem anderen Werkstoff besteht, der für den beabsichtigten Verwendungszweck korrosionsbeständig und das im folgenden beschriebene Einschmelzen in die Bohrung des Kegels ermöglicht. Nach dem Einstecken der Messelektrode wird der Kegel bei einer Temperatur zwischen etwa 700 und 750 °C während zwei Stunden gesintert. Bei dem Sintervorgang kann eine derartige Elektrode dicht eingeschmolzen werden. Bei diesem Ausführungsbeispiel sind jedoch Elektrodenmaterialien wie Tantal nicht verwendbar, falls diese Materialien beim Sintern versprödern oder wenn die Temperatur-Ausdehnungskoeffizienten des Materials der Elektrode und des Kegels zu unterschiedlich sind.

Falls erforderlich, wird der Kegel nach dem Sintervorgang auf Mass geschliffen und vor dem Einsetzen in eine entsprechende konische Ausnehmung des Sondenkörpers 4 auf der Aussenseite 3 mit Email gespritzt und nach dem Trocknen in den Sondenkörper 4 einemailliert.

Der Sondenkörper ist vor diesem Arbeitsgang bereits voremailliert. Die Messsonde entsprechend diesem Ausführungsbeispiel ist vor allem als Porenprüfsonde und als Messsonde zur Bestimmung des rH-Werts verwendbar. Die Vorteile dieser Konstruktion sind: 1. Bei entsprechender Ausbildung des Kegels können mehrere Elektroden eingeschmolzen werden. 2. Die Messsonde ist auch dann dicht, wenn in der Fig. 1 von oben nach unten fortschreitend Korrosionseffekte auftreten sollten. 3. Wenn die Korrosionsbeständigkeit des Keramikmaterials nicht ausreichend sein sollte, kann an der produktberührten Seite des Kegels eine zusätzliche korrosionsbeständige Emailschicht aufgebracht werden. 4. Die Konstruktion ist geeignet für hohe Drücke, die Kegel können separat vom Sondenträger vorgefertigt werden.

Das in Fig. 2 dargestellte Ausführungsbeispiel, bei dem ebenfalls der Sondenkörper 4 eine Emailschicht E aufweist, entspricht dem Ausführungsbeispiel in Fig. 1 mit der Ausnahme, dass als Messelektrode 1 eine Schraube vorgesehen ist, die in einen in den Kegel 2 eingeschmolzenen zylindrischen Metallkörper 5 eingeschraubt ist. Ein besonderer Vorteil dieser Konstruktion besteht darin, dass die als Elektrode dienende Schraube durch eine Schraube aus einem anderen Werkstoff ersetzt werden kann, wenn die Messsonde zu Messungen in anderen korrodierenden Medien eingesetzt werden soll, die die Verwendung einer Elektrode aus einem anderen Werkstoff erfordern.

Bei dem in Fig. 3 dargestellten Ausführungsbeispiel sind die dem Ausführungsbeispiel in Fig. 2 entsprechenden Elemente mit denselben Bezugszeichen versehen. Bei diesem Ausführungsbeispiel besteht der eingeschmolzene zylindrische Metallkörper 5 aus einem Material, das gegenüber dem benutzten Elektrolyten chemisch beständig ist. Bei diesem Ausführungsbeispiel besteht die Elektrode 1 aus einer Schraube aus einem Material, das emaillierfähig ist und ebenfalls gegenüber dem Elektrolyten chemisch beständig ist. Die Aussenseite des Kopfs dieser Schraube ist mit einer Emailschicht 11 versehen, die um die Kopfunterseite heruntergezogen ist, um ein Diaphragma 12 zu bilden. Im Bereich des Diaphragmas sind die Kopfunterseite und die Oberseite des Kegels 3 überschliffen. Der Elektrolyt wird durch Bohrungen 8, 9, 6 und 10 bis an das Diaphragma 12 geleitet. Diese emaillierte Sonde ist insbesondere als pH-Messsonde verwendbar.

**Patentansprüche**

1. Messsonde mit einem in einen emaillierten Sondenkörper einemaillierten Träger für eine Elektrode, dadurch gekennzeichnet, dass der Träger ein in den Sondenkörper (4) einemaillierter Kegel (2) aus Email oder Keramikmaterial ist, in den die Elektrode (1) oder ein zur Befestigung der Elektrode dienender Metallkörper (5) eingeschmolzen ist.

2. Messsonde nach Anspruch 1, dadurch gekennzeichnet, dass mehrere Elektroden (1) in den Kegel (2) eingeschmolzen sind (Fig. 1).

3. Messsonde nach Anspruch 1, dadurch gekennzeichnet, dass eine als Elektrode dienende Schraube in den Metallkörper (5) eingeschraubt ist.

**Claims**

1. Measuring probe comprising a carrier for an electrode fused with an enameled probe body, characterized in that the carrier is a cone (2) out of enamel or ceramic material fused with the probe body (4), into which cone the electrode (1) or a metallic body (5) serving for mounting the electrode is fused-in.

2. Measuring probe as claimed in claim 1, characterized in that several electrodes (1) are fused with the cone (2) (Fig. 1).

3. Measuring probe as claimed in claim 1, characterized in that a screw serving as an electrode is screwed into the metallic body (5).

**Revendications**

1. Sonde de mesure comportant un support pour 'une électrode, émaillé dans un corps de sonde émaillé, caractérisée en ce que le support est un cône (2) en émail ou en matière céramique, émaillé dans le corps de sonde (4), et dans lequel on soude l'électrode (1) ou un corps métallique (5) servant à fixer l'électrode.

2. Sonde de mesure selon la revendication 1, caractérisée en ce que plusieurs électrodes (1) sont soudées dans le cône (2) (figure 1).

3. Sonde de mesure la revendication 1, caractérisée en ce qu'on visse une vis servant d'électrode dans le corps métallique (5).

FIG. 1

FIG. 2

FIG. 3